# EUROPÄISCHE PATENTSCHRIFT

(11) **EP 3 580 116 B1**
(45) Veröffentlichungstag und Bekanntmachung des Hinweises auf die Patenterteilung: **18.08.2021**
(21) Anmeldenummer: 18705847.4
(22) Anmeldetag: 06.02.2018
(51) Int. Cl.: B62D 1/06

(54) **LENKRAD UND VERFAHREN ZUR HERSTELLUNG EINES LENKRADS**
STEERING WHEEL AND METHOD FOR PRODUCING A STEERING WHEEL
VOLANT DE DIRECTION ET PROCÉDÉ DE FABRICATION D'UN VOLANT DE DIRECTION

(30) Priorität: 10.02.2017 DE 102017102688
(43) Veröffentlichungstag der Anmeldung: 18.12.2019
(73) Patentinhaber: ZF Automotive Safety Germany GmbH, 63743 Aschaffenburg (DE)
(72) Erfinder: HIRZMANN, Guido, 63877 Sailauf (DE); LAMMERS, Alexander, 64367 Mühltal (DE)
(74) Vertreter: ZF Patentabteilung - DIPS
(86) Internationale Anmeldenummer: PCT/EP2018/052875
(87) Internationale Veröffentlichungsnummer: WO 2018/146061

(56) Entgegenhaltungen:
- EP-A1- 2 572 942
- WO-A1-2014/096127
- WO-A1-2015/055172
- WO-A2-2014/191836
- DE-A1-102007 037 170
- DE-A1-102015 006 543
- US-A1- 2016 332 656

## Beschreibung

Die Erfindung betrifft ein Lenkrad für ein Fahrzeug mit einem Lenkradkranz und einer oder mehreren Lenkradspeichen, wobei zumindest der Lenkradkranz eine Beschichtung, insbesondere eine Umschäumung, und mindestens einen langgestreckten elektrischen Leiter, insbesondere mindestens einen Heizdraht, für eine Lenkradheizung umfasst, wobei am Lenkradkranz und/oder an einer der Lenkradspeichen ein mit einer elektrischen Energiequelle im Fahrzeug verbundenes Anschlussterminal angeordnet ist, mit dem ein erstes und ein zweites Ende des mindestens einen Leiters elektrisch verbunden sind.

Zusätzlich betrifft die Erfindung ein Verfahren zur Herstellung eines Lenkrads für ein Fahrzeug, mit einem Lenkradkranz und einer oder mehreren Lenkradspeichen, wobei zumindest der Lenkradkranz eine Beschichtung, insbesondere eine Umschäumung, umfasst.

Aus Komfortgründen weisen Fahrzeuglenkräder häufig eine Lenkradheizung auf, die einen oder mehrere im Lenkradkranz und/oder in den Lenkradspeichen des Fahrzeuglenkrads angeordnete elektrische Heizdrähte umfasst. Darüber hinaus verfügen moderne Fahrzeuglenkräder häufig über Sensoren, um zu erfassen, ob ein Fahrer gerade mindestens eine Hand am Fahrzeuglenkrad hat. Solche Sensoren zur Handerkennung, auch Hands-On-Detection-Sensoren (HOD) genannt, umfassen Sensordrähte, die im Fahrzeuglenkrad angeordnet sind.

Eine Möglichkeit, ein Fahrzeuglenkrad mit Lenkradheizung und/oder Sensoren zur Handerkennung herzustellen, besteht darin, Matten, die elektrische Heizdrähte und/oder Sensordrähte umfassen, auf dem Lenkradkranz und/oder den Lenkradspeichen anzuordnen. Diese können beispielsweise auf einer Umschäumung festgeklebt werden.

Eine alternative Möglichkeit ist aus der gattungsgemäßen DE 10 2013 017 319 A1 bekannt. In dieser Druckschrift wird ein Verfahren beschrieben, bei dem Heiz- und/oder Sensordrähte direkt in die Umschäumung eines Fahrzeuglenkrads, also in den Lenkradkranz und/oder die Lenkradspeichen, eingebracht werden. Dafür wird in die Umschäumung ein Schnitt eingebracht, in den ein Heiz- und/oder Sensordraht eingelegt wird. Danach schließt sich der Schnitt aufgrund der Eigenelastizität der Umschäumung und fixiert dadurch den Heiz- und/oder Sensordraht in seiner Position. Vorzugsweise erfolgt bei diesem Verfahren das Einbringen des Schnitts und das Positionieren des Heiz- und/oder Sensordrahts in einem gemeinsamen Arbeitsschritt, sodass dieses Verfahren sehr effizient und schnell ist. Darüber hinaus wird bei diesem Verfahren kein Material abgetragen. Der wenigstens eine Heiz- und/oder Sensordraht kann dann beispielsweise über einen an der Lenkradspeiche angeordneten Anschluss mit dem Stromnetz des Fahrzeugs verbunden werden.

Es sind also aus dem Stand der Technik bereits effiziente und kostengünstige Verfahren zum Einbringen von Heiz- und/oder Sensordrähten in ein Fahrzeuglenkrad bekannt.

Um die gewünschte Funktionalität einer Lenkradheizung und/oder im Fahrzeuglenkrad integrierter Sensoren, z.B. zur Handerkennung, zu erhalten, müssen die Heiz- und/oder Sensordrähte mit zugehörigen Steuer-, Regel- und/oder Bedieneinheiten elektrisch verbunden werden.

Eine solche Steuer-, Regel- und/oder Bedieneinheit kann in Form eines Heizungssteuergeräts im Lenkrad, zum Beispiel in der Nabe, vorgesehen sein. Über dieses Steuergerät werden einerseits die Heiz- und/oder Sensordrähte mit Strom versorgt, andererseits können z.B. Temperatursensoren mit diesem Steuergerät elektrisch verbunden sein, sodass ein Regelkreis geschlossen wird. Das Steuergerät wird über eine Wickelfeder mit Strom versorgt. Zusätzlich kann eine Signalleitung vom Heizungssteuergerät über die Wickelfedern zu weiteren Steuergeräten innerhalb des Fahrzeugs vorgesehen sein.

Alternativ kann ein Steuergerät in der Lenksäule, also im feststehenden Teil des Fahrzeugs angeordnet sein, sodass die Heiz- und/oder Sensordrähte über eine Wickelfeder mit diesem Steuergerät verbunden werden müssen.

Es sind auch Varianten mit zwei Steuergeräten bekannt.

Die WO 2014/096127 A1 und die EP 2 572 942 A1 offenbaren jeweils ein kombiniertes Heizungs- und Sensorsystem, das beispielsweise in einem Fahrzeuglenkrad zum Einsatz kommen kann. Das kombinierte Heizungs- und Sensorsystem umfasst dabei ein am Lenkrad angeordnetes, elektronisches Steuerungsmodul und ermöglicht sowohl eine Beheizung des Lenkrads als auch eine kapazitive Berührungserkennung.

Die DE 10 2007 037 170 A1 betrifft eine Heizeinrichtung, beispielsweise zum Beheizen einer Fahrzeug-Lenkeinrichtung, mit einem elektrischen Heizstrang, der mindestens zwei elektrische Leit-Einrichtungen aufweist.

In der US 2016/0332656 A1 ist ein abnehmbarer Bezug für ein Lenkrad offenbart, wobei die Stromversorgung einer im Lenkradbezug integrierten, elektrischen Heizvorrichtung über einen Magnetanschluss erfolgt.

Darüber hinaus ist in der WO 2014/191836 A2 bereits ein Heizelement für ein Fahrzeuglenkrad beschrieben, wobei das Heizelement besonders feuchtebeständig ausgeführt ist. Die DE102015006543 zeigt ein Fahrzeuglenkrad mit einem Heizelement und einem im Lenkradskelett verclipsten Anschlussterminal, wobei das Heizelement mittels Kunstharzmatte fixiert und über das Lenkradskelett gelegt wird.

Die elektrische Verbindung der Heiz- und/oder Sensordrähte mit den Steuergeräten bedingt einen Aufwand für die Verkabelung und das elektrische Anschließen der Leitungen. Dabei werden die Kabel entweder direkt angeschlagen oder mittels Steckverbindern verbunden. Darüber hinaus wird durch die Steuergeräte im Lenkrad, an der Lenksäule und/oder an anderen Stellen im Fahrzeug ein gewisser Bauraum beansprucht.

Im Rahmen der in der Fahrzeugtechnik allgemeinen Bemühungen zur Reduktion von Kosten und zur Miniaturisierung von Bauelementen wird dabei angestrebt, den für die Steuergeräte notwendigen Bauraum zu verkleinern und den Aufwand für die Verkabelung zu verringern.

Die Aufgabe der vorliegenden Erfindung ist daher, ein Lenkrad der eingangs genannten Art zu schaffen, das kostengünstig herstellbar ist und dessen Einrichtungen zur Lenkradheizung und/oder zur Handerkennung wenig Bauraum benötigen.

Erfindungsgemäß wird diese Aufgabe gelöst durch ein Lenkrad der eingangs genannten Art, bei dem das Anschlussterminal einen Temperatursensor und einen als Temperaturregler für die Lenkradheizung ausgebildeten Heizungsregler umfasst, und bei dem das Anschlussterminal in einer Tasche innerhalb der Beschichtung angeordnet ist. Generell wird unter dem Begriff "Anschlussterminal" im einfachsten Falle ein Element verstanden, mit dem elektrische Leitungen verbunden werden können. Erfindungsgemäß enthält jedoch das Anschlussterminal auch Sensoren, z.B. zur Temperaturmessung, und/oder Steuer- oder Regelelemente. Das Anschlussterminal sitzt dabei in unmittelbarer Nähe des mindestens einen elektrischen Leiters, sodass der Aufwand zu dessen elektrischer Verbindung sinkt. Durch die Integration zahlreicher Funktionen in das Anschlussterminal können zudem Steuergeräte sowie elektrische Leitungen zu Steuergeräten im Lenkrad oder außerhalb des Lenkrads eingespart werden. Es ist lediglich notwendig, elektrische Energie und optional ein Signal in das Anschlussterminal einzukoppeln.

Gemäß einer Ausführungsform ist der mindestens eine elektrische Leiter direkt in die Beschichtung eingebettet. Dabei ist die Beschichtung insbesondere eine Umschäumung, wobei der insbesondere als Heizdraht ausgeführte elektrische Leiter bevorzugt in zumindest einem Schnitt der Umschäumung sitzt. Nach dem Einbetten des Heizdrahts in den Schnitt schließt sich die Umschäumung aufgrund ihrer Eigenelastizität selbst. Der Draht ist somit fest in die Umschäumung eingebettet. Es ist also keine zusätzliche Fixierung des Heizdrahtes, z.B. mit Klammern oder Klebstoff, notwendig. Außerdem wird beim Schneiden kein Material abgetragen, sondern lediglich eine vorhandene Umschäumung eingeschnitten.

Erfindungsgemäß umfasst das Anschlussterminal einen Temperatursensor, der insbesondere einen NTC-Widerstand aufweist. Unter einem NTC-Widerstand ist dabei ein Widerstand mit einem negativen Temperaturkoeffizienten, ein sogenannter Heißleiter, zu verstehen. Somit kann die Temperatur der Heizdrähte und damit der Lenkradheizung insgesamt erfasst und geregelt werden. Der Temperatursensor wird zum Beispiel verwendet, um die Lenkradheizung beim Erreichen einer oberen Grenztemperatur abzuschalten. Alternativ zum NTC-Widerstand kann der Temperatursensor auch einen PTC-Widerstand oder ein Thermoelement aufweisen.

Eine Weiterbildung sieht vor, dass das Anschlussterminal über eine Signalleitung, insbesondere eine Bus-Leitung, mit einem Bedienelement und/oder einem Steuergerät im Fahrzeug verbunden ist, oder dass das Anschlussterminal fahrzeugseitig ausschließlich über Heizstrom führende Leitungen verbunden ist. Es können so weitere Komfortfunktionen ermöglicht werden, die über Bedienelemente innerhalb oder außerhalb des Lenkrads oder über Steuergeräte im Fahrzeug gesteuert werden, z.B. Vorheizen im Stand des Fahrzeugs. Ebenfalls können so im Fahrzeuglenkrad erfasste Sensorwerte, z.B. Temperatur oder die Handerkennung, innerhalb des Fahrzeugs kommuniziert werden. Gleichzeitig sind ein geringer Verkabelungsaufwand und ein einfacher Aufbau, der wenig Bauraum beansprucht, gewährleistet.

Erfindungsgemäß umfasst das Anschlussterminal ferner einen als Temperaturregler für die Lenkradheizung ausgebildeten Heizungsregler, vorzugsweise einen mit einer Platine ausgestatteten Heizungsregler oder ein PTC-Element als integrierten Heizungsregler. Ein PTC-Element ist dabei ein Widerstand mit einem positiven Temperaturkoeffizienten, also ein sogenannter Kaltleiter. Bei einem Kaltleiter erhöht sich der Leitungswiderstand mit steigender Temperatur. Somit kann eine Lenkradheizung ermöglicht werden, bei der ab einer bestimmten Temperatur nur noch ein sehr geringer Heizstrom durch die Heizdrähte fließt. Die Temperatur bleibt damit im Wesentlichen unterhalb einer vorgegebenen Grenztemperatur. Durch das Anordnen des Heizungsreglers im Anschlussterminal können weitere Steuergeräte sowie der zugehörige Verkabelungsaufwand entfallen.

Das Anschlussterminal kann so ausgebildet sein, dass es am Lenkradkranz und/oder an einer der Lenkradspeichen verclipst und/oder darin eingesteckt ist. Damit ist eine Montage des Anschlussterminals in unmittelbarer Nähe des mindestens einen Heizdrahts gewährleistet.

Erfindungsgemäß ist das Anschlussterminal in einer Tasche innerhalb der Beschichtung angeordnet, insbesondere in die Tasche eingeclipst und/oder darin eingeschäumt oder eingespritzt. Damit ist das Anschlussterminal haptisch nicht erkennbar und beeinträchtigt die Bedienung des Lenkrads nicht. Die Beschichtung ist dabei bevorzugt eine Umschäumung, wobei der relativ harte Schaum gegebenenfalls zu einem Teil einer Clipverbindung wird.

Vorteilhafterweise umfasst das Anschlussterminal mindestens zwei Kontaktelemente. Das erste und das zweite Ende des mindestens einen elektrischen Leiters sind durch Fusen, Löten, Schweißen, Crimpen, Kleben, Klemmen oder Schrauben elektrisch mit jeweils einem der Kontaktelemente verbunden, wobei die Kontaktelemente vorzugsweise um den elektrischen Leiter gefaltet sind. Auf diese Weise ist der beispielsweise als Heizdraht ausgeführte, mindestens eine elektrische Leiter sehr platzsparend und zuverlässig am Anschlussterminal angeschlossen.

In einer Ausführungsform ist am Lenkradkranz ein Sensor zur Handerkennung angeordnet und der Sensor elektrisch mit dem Anschlussterminal verbunden. Somit sinkt der Verkabelungs- und Anschlussaufwand für zusätzliche, im Fahrzeuglenkrad vorhandene Sensoren.

Bevorzugt ist das Anschlussterminal kleiner als 15 mm x 15 mm x 8 mm. Das Anschlussterminal kann somit an einer Lenkradspeiche oder am Lenkradkranz angeordnet werden, ohne dass es bei der Bedienung des Lenkrads optisch oder haptisch stört.

In einer Gestaltungsvariante ist eine Außenkontur des Terminals geometrisch an eine Form des Lenkradkranzes und/oder einer der Lenkradspeichen angepasst. Es ergibt sich dadurch ein optisch und haptisch angenehmes Erscheinungsbild.

Eine zusätzliche Aufgabe der vorliegenden Erfindung ist, ein Verfahren der eingangs genannten Art bereitzustellen, das kostengünstig durchführbar ist.

Diese Aufgabe wird erfindungsgemäß gelöst durch ein Verfahren zur Herstellung eines Lenkrads für ein Fahrzeug, mit einem Lenkradkranz und einer oder mehreren Lenkradspeichen, wobei zumindest der Lenkradkranz eine als Umschäumung ausgeführte Beschichtung umfasst, und wobei das Verfahren folgende Schritte aufweist:
a) Anbringen eines Anschlussterminals für zumindest einen langgestreckten elektrischen Leiter am Lenkradkranz und/oder an einer der Lenkradspeichen indem das Anschlussterminal am Lenkradkranz und/oder an einer der Lenkradspeichen verclipst oder in einer Schaumtasche angeordnet oder in eine Schaumtasche eingeschäumt wird,
b) Verlegen des mindestens einen elektrischen Leiters für eine Lenkradheizung direkt in die Beschichtung, vorzugsweise in einem Schnitt der Beschichtung, und
c) elektrisches Verbinden eines ersten und eines zweiten Endes des mindestens einen elektrischen Leiters mit dem Anschlussterminal.

Somit wird die Lenkradheizung in einem einzigen Verfahren komplett montiert. Ein nachfolgender Verkabelungsaufwand entfällt zumindest teilweise. Das Verfahren kann dazu auf einer einzigen Maschine und/oder in einer einzigen Montagestation durchgeführt werden und wird bevorzugt zur Herstellung eines erfindungsgemäßen Lenkrads genutzt.

In einer Ausführungsform werden im Schritt c) das erste und das zweite Ende des mindestens einen elektrischen Leiters durch Fusen, Löten, Schweißen, Crimpen, Kleben, Klemmen oder Schrauben elektrisch mit jeweils einem Kontaktelement des Terminals verbunden, wobei die Kontaktelemente vorzugsweise anschließend um den elektrischen Leiter gefaltet werden.

Gemäß einer vorteilhaften Ausgestaltung wird das Verfahren ganz oder teilweise automatisiert ausgeführt; vorzugsweise durch einen Roboter, also einer frei programmierbaren, mehrachsigen Werkzeugmaschine.

In einer Verfahrensvariante wird ein Sensor zur Handerkennung am Lenkradkranz angeordnet und elektrisch mit dem Anschlussterminal verbunden.

Nach einer Ausführungsform erfolgt das elektrische Verbinden und/oder ein Abisolieren des ersten und des zweiten Endes des elektrischen Leiters durch einen Laser, insbesondere durch einen mittels einer frei programmierbaren, mehrachsigen Werkzeugmaschine geführten Laser. Ein Laser kann dieses Verfahren höchst präzise und schnell durchführen. Darüber hinaus sind dabei keine Zusatzelemente, z.B. Löt- oder Schweißspitzen oder Schneidelemente, notwendig.

Bevorzugt führt eine frei programmierbare, mehrachsige Werkzeugmaschine eine Schneideinrichtung längs der als Umschäumung oder Umspritzung ausgebildeten Beschichtung und schneidet diese ohne Abtrag auf und legt den insbesondere als Heizdraht ausgeführten elektrischen Leiter vor einem Zurückfedern der Umschäumung oder Umspritzung in den Schnitt ein. Es können folglich die Heizdrähte beliebig innerhalb der Umschäumung oder Umspritzung angeordnet werden. Die Schneideinrichtung kann eine Klinge und/oder ein Ultraschallschneidwerkzeug umfassen.

Die Erfindung wird nachstehend anhand verschiedener Ausführungsbeispiele erläutert, die in den beigefügten Zeichnungen gezeigt sind. Es zeigen:
- Figur 1 ein erfindungsgemäßes Lenkrad für ein Fahrzeug,
- Figur 2 eine schematische Schnittdarstellung des Lenkrads nach Figur 1,
- Figur 3 eine schematische Ansicht eines Anschlussterminals eines erfindungsgemäßen Lenkrads in einer ersten Ausführungsform,
- Figur 4 eine schematische Ansicht eines Anschlussterminals eines erfindungsgemäßen Lenkrads in einer zweiten Ausführungsform,
- Figur 5 eine schematische Ansicht eines Anschlussterminals eines erfindungsgemäßen Lenkrads in einer dritten Ausführungsform und
- Figur 6 eine schematische Ansicht eines Anschlussterminals eines erfindungsgemäßen Lenkrads in einer vierten Ausführungsform.

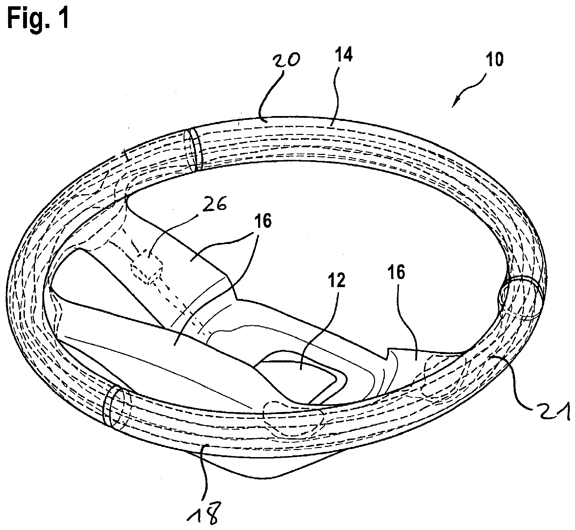

In Figur 1 ist ein Lenkrad 10 für ein Fahrzeug dargestellt. Das Lenkrad 10 verfügt über eine Lenkradnabe 12 und einen Lenkradkranz 14. Die Lenkradnabe 12 und der Lenkradkranz 14 sind über mehrere Lenkradspeichen 16 verbunden.

Im Lenkradkranz 14 ist mindestens ein langgestreckter elektrischer Leiter 18 einer Lenkradheizung angeordnet, der hier beispielhaft als Heizdraht ausgeführt ist. Dieser mindestens eine Heizdraht ist in eine Beschichtung 20 des Lenkradkranzes 14 eingebettet, wobei die Beschichtung 20 hier beispielhaft eine Umschäumung ist.

Neben dem Heizdraht 18 ist auch mindestens ein in gleicher Weise in die Umschäumung 20 eingebetteter Sensordraht 21 im Lenkradkranz 14 vorgesehen.

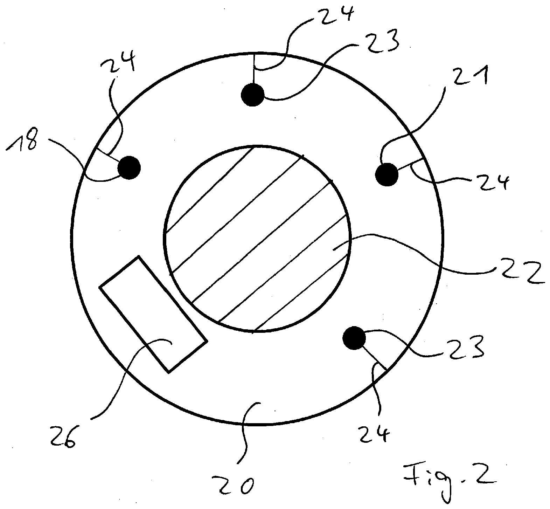

Figur 2 zeigt eine schematische, vergrößerte Schnittdarstellung durch eine beliebige Stelle des Lenkradkranzes 14.

Die Umschäumung 20 ist um ein Lenkradskelett 22, das den Lenkradkranz 14, die Speichen 16 und die Nabe 12 umfasst, herum angeordnet. Ebenfalls sind hier der Heizdraht 18 sowie der Sensordraht 21 im Schnitt zu sehen. Die mit 23 bezeichneten Drähte können entweder als Heiz- oder als Sensordrähte ausgeführt sein.

Sowohl der Heizdraht 18 als auch der Sensordraht 21 und die Drähte 23 sind über Schnitte 24 in die Umschäumung 20 eingebettet.

Darüber hinaus ist ein Anschlussterminal 26 in die Umschäumung 20 eingebettet. Das Anschlussterminal 26 ist in der dargestellten Ausführungsform in die Umschäumung 20 des Lenkradkranzes 14 eingeschäumt. Alternativ kann sich das Anschlussterminal 26 auch in einer Tasche der Umschäumung 20 befinden. Zusätzlich oder alternativ kann das Anschlussterminal 26 mit dem Lenkradskelett 22 verclipst sein.

Ferner kann das Anschlussterminal 26 auf dieselbe Art und Weise wie gerade beschrieben in der Umschäumung 20 einer Speiche 16 angeordnet und befestigt sein (siehe Figur 1).

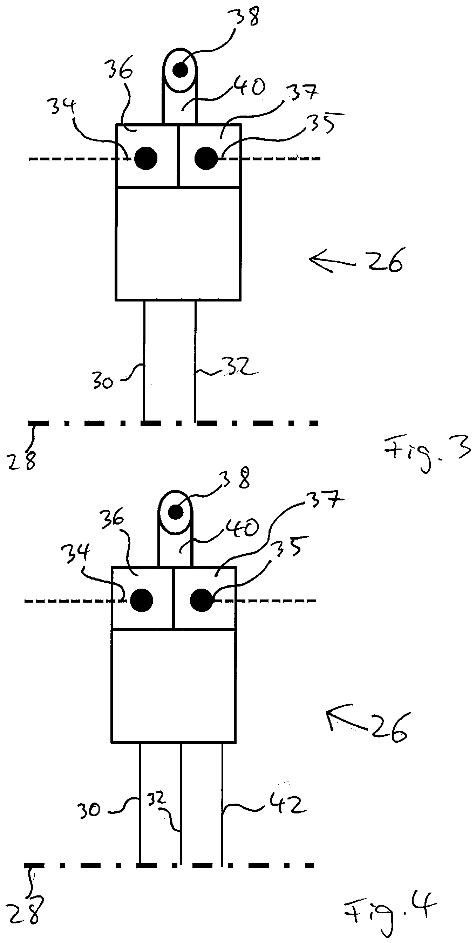

In den Figuren 3 bis 6 ist jeweils das Anschlussterminal 26 in verschiedenen Ausführungsformen dargestellt. Die Darstellung ist dabei schematischer Art und vergrößert.

Das Anschlussterminal 26 ist in allen Ausführungsformen elektrisch mit einer schematisch angedeuteten Wickelfeder 28 verbunden. Die elektrische Verbindung umfasst dazu zumindest eine Stromversorgung, die durch zwei Leitungen 30, 32 realisiert ist. Über die Leitungen 30, 32 ist das Anschlussterminal 26 mit einer elektrischen Energiequelle im Fahrzeug verbunden.

Darüber hinaus ist das Anschlussterminal 26 in allen Ausführungsformen mit mindestens dem Heizdraht 18 elektrisch verbunden. In den Figuren sind exemplarisch zwei Enden 34, 35 des Heizdrahtes 18 dargestellt, die mit Kontaktelementen 36, 37 des Anschlussterminals 26 durch Fusen, Löten, Schweißen, Crimpen, Kleben, Klemmen oder Schrauben elektrisch verbunden sind. Zusätzlich können die Kontaktelemente 36, 37 um den jeweiligen Heizdraht 18 gefaltet sein.

Auf die gleiche Weise wie der Heizdraht 18 kann der Sensordraht 21, der Bestandteil eines Sensors zur Handerkennung sein kann, mit dem Anschlussterminal 26 verbunden sein.

Zusätzlich verfügt das Anschlussterminal 26 über einen Temperatursensor 38, der über einen Abstandshalter 40 mit dem Grundkörper des Anschlussterminals 26 verbunden ist.

Der Temperatursensor 38 umfasst bevorzugt einen NTC-Widerstand, also einen Widerstand mit negativem Temperaturkoeffizienten. Bei einem solchen Widerstand ändert sich der Spannungsabfall in Abhängigkeit der Umgebungstemperatur, sodass er als Sensor genutzt werden kann. Es wird dabei angestrebt, den Temperatursensor 38 möglichst nahe an dem mindestens einen Heizdraht 18 zu positionieren, ihn jedoch von der durch die Leitungen 30, 32 realisierten Stromversorgung zu beabstanden. Dabei ist das Ziel, möglichst exakt die Temperatur der Oberfläche des Lenkradkranzes 14 zu erfassen.

Figur 3 zeigt eine erste Ausführungsform des Anschlussterminals 26, bei der das Anschlussterminal 26 lediglich zur Stromversorgung des Heizdrahts 18, dessen Enden 34, 35 dargestellt sind, genutzt wird.

Eine Steuerung oder Regelung der Lenkradheizung erfolgt im ersten Ausführungsbeispiel in einem nicht dargestellten Steuergerät, das an der Lenksäule oder an einem anderen Ort im Fahrzeug sitzt. Die Regelung wird z.B. durch ein Ein- und Ausschalten der über die Leitungen 30, 32 realisierten Stromversorgung des Heizdrahts 18 ermöglicht.

Optional kann der Temperatursensor 38 als PTC-Element ausgeführt sein, also als ein Widerstand mit einem positiven Temperaturkoeffizienten, der als integrierter Heizungsregler arbeitet.

Figur 4 zeigt eine zweite Ausführungsform des Anschlussterminals 26. Hier ist zusätzlich zu den Leitungen 30, 32 der Stromversorgung eine Signalleitung 42 vorgesehen, die ebenfalls das Anschlussterminal 26 mit der Wickelfeder 28 verbindet.

Die Signalleitung 42 kann z.B. als Busleitung, insbesondere als LIN-Bus-leitung ausgeführt sein.

Die Signalleitung 42 kann als Signalausgang genutzt werden.

Beispielsweise können dann Temperaturwerte, die durch den Temperatursensor 38 erfasst werden, aus dem Anschlussterminal 26 herausgeführt werden. Diese Temperaturwerte werden an anderer Stelle im Fahrzeug verwendet, z.B. in einem in der Lenksäule installierten, nicht dargestellten Heizungssteuergerät.

Selbstverständlich können im Anschlussterminal 26 auch andere Sensoren, z.B. ein Sensor zur Überwachung des Heizstroms, vorgesehen sein. Die Werte dieser Sensoren werden ebenfalls über die Signalleitung 42 zu Steuergeräten an anderen Stellen des Fahrzeugs kommuniziert.

Darüber hinaus lässt sich die Signalleitung 42 als Signaleingang nutzen.

Damit kann über die Signalleitung 42 ein Signal zum Steuern der Heizeinrichtung in das Anschlussterminal 26 geleitet werden. Beispielsweise kann sich ein Schalter im Anschlussterminal 26 befinden, der über die Signalleitung 42 ein- und ausgeschaltet wird. Ferner kann über die Signalleitung 42 das Anschlussterminal 26 mit beliebigen Bedienelementen und/oder Steuergeräten innerhalb des Fahrzeugs verbunden sein.

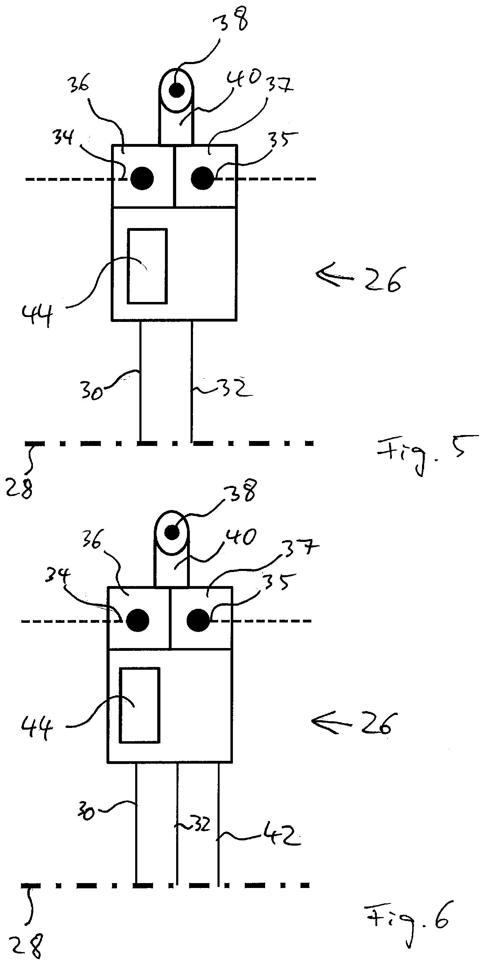

In der dritten Ausführungsform, die in Figur 5 dargestellt ist, umfasst das Anschlussterminal 26 zusätzlich einen Heizungsregler 44, der insbesondere als Temperaturregler für die Lenkradheizung ausgebildet ist.

Der Heizungsregler 44 ist zum Beispiel ein PTC-Element. Alternativ kann der Heizungsregler 44 jedoch auch eine Platine mit einer beliebigen elektrischen Schaltung umfassen.

In dieser Ausführungsform ist das Anschlussterminal 26 lediglich mit den beiden Leitungen 30, 32 an die Stromversorgung angeschlossen. Die Steuerung oder Regelung der Lenkradheizung wird vollständig innerhalb des Anschlussterminals 26 ausgeführt. Dazu wird ein Regelkreis zwischen dem Temperatursensor 38 und dem Heizungsregler 44 geschlossen.

Eine vierte Ausführungsform ist in der Figur 6 dargestellt. Diese Ausführungsform verfügt sowohl über die Signalleitung 42 als auch über den Heizungsregler 44.

Bei dieser Ausführungsform kann die Steuerung oder Regelung der Lenkradheizung ebenfalls vollständig innerhalb des Anschlussterminals 26 erfolgen. Jedoch ist es auch möglich, diese Regelung über die Signalleitung 42 von außen zu beeinflussen und/oder ihr Werte vorzugeben. Beispielsweise könnte über die Signalleitung 42 eine Soll-Temperatur für den Heizungsregler 44 vorgegeben werden.

Darüber hinaus lassen sich über die Signalleitung 42 zusätzliche Bedienelemente oder Steuergeräte mit dem Heizungsregler 44 und dem Anschlussterminal 26 verbinden. Ferner können über die Signalleitung 42 innerhalb des Anschlussterminals erfasste Sensorwerte oder Regelparameter, z.B. Temperatur- oder Spannungswerte, an andere Stellen innerhalb des Fahrzeugs kommuniziert werden.

Die Herstellung des Lenkrads 10 geschieht folgendermaßen:
Zunächst wird das Anschlussterminal 26 am Lenkradkranz 14 und/oder an einer der Lenkradspeichen 16 angebracht. Dabei kann das Anschlussterminal 26 am Lenkradkranz 14 oder an einer der Lenkradspeichen 16 verclipst werden. Ebenfalls kann das Anschlussterminal 26 in einer Schaumtasche der Umschäumung 20 angeordnet sein oder direkt in die Umschäumung 20 eingeschäumt werden.
Danach wird bzw. werden der Heizdraht 18 für die Lenkradheizung und/oder der Sensordraht 21 in dem jeweils zugehörigen Schnitt 24 in der Umschäumung 20 verlegt. Dabei wird mit Hilfe einer Schneideinrichtung, die eine Klinge und/oder ein Ultraschallwerkzeug umfasst, der Schnitt 24 in die Umschäumung 20 eingebracht und die beiden die Wände des Schnittes 24 bildenden Abschnitte der Umschäumung 20 mit Hilfe der Schneideinrichtung oder eines anderen Werkzeugs auseinander gedrückt, sodass der Schnitt 24 offen ist.

In diesem Zustand, also vor dem Zurückfedern der Umschäumung 20 und Schließen des Schnitts 24, wird der Heizdraht 18 und/oder der Sensordraht 21 in die Umschäumung 20 eingebracht. Er wird auf dem Grund des Schnittes 24 platziert. Dann wird das Werkzeug entfernt oder in Richtung des Schnittes 24 weiterbewegt, sodass sich der Schnitt 24 aufgrund der Eigenelastizität der Umschäumung 20 schließt und den Heizdraht 18 oder den Sensordraht 21 so in der Umschäumung 20 fixiert.

Die Schneideinrichtung wird dabei von einer frei programmierbaren, mehrachsigen Werkzeugmaschine (Roboter) längs der Umschäumung 20 geführt und schneidet die Schnitte 24 ohne Materialabtrag.

Der Sensordraht 21 ist beispielsweise Bestandteil eines Sensors zur Handerkennung (HOD).

In der Folge werden die Enden 34, 35 des Heizdrahts 18 oder des Sensordrahts 21 mit dem Anschlussterminal 26 verbunden.

Dabei werden die Enden 34, 35 durch Fusen, Löten, Schweißen, Crimpen, Kleben, Klemmen oder Schrauben elektrisch mit dem jeweils zugeordneten Kontaktelement 36, 37 des Anschlussterminals 26 verbunden.

Das elektrische Verbinden der Enden 34, 35 mit dem jeweils zugeordneten Kontaktelement 36, 37 kann mit Hilfe eines Lasers erfolgen. Der Laser kann ebenfalls von einer frei programmierbaren, mehrachsigen Werkzeugmaschine geführt werden.

Außerdem wird der Laser auch zum Abisolieren der Enden 34, 35 des Heizdrahtes 18 genutzt.

Die Kontaktelemente 36, 37 werden anschließend um die Heizdrähte 18 gefaltet, sodass diese die Enden 34, 35 von zwei oder drei Seiten umschließen. Insbesondere kann das Umbiegen mit flächigen, padförmigen Kontaktelemente umgesetzt werden, die nach dem elektrischen Kontaktieren der Enden 34, 35 um 180° umgefaltet werden.

Das gesamte beschriebene Verfahren wird ganz oder teilweise automatisiert, z.B. durch einen Roboter, ausgeführt.

## Patentansprüche

1. Lenkrad (10) für ein Fahrzeug mit
einem Lenkradkranz (14) und
einer oder mehreren Lenkradspeichen (16),
wobei zumindest der Lenkradkranz (14) eine Beschichtung (20) und mindestens einen langgestreckten elektrischen Leiter (18) für eine Lenkradheizung umfasst,
wobei am Lenkradkranz (14) und/oder an einer der Lenkradspeichen (16) ein mit einer elektrischen Energiequelle im Fahrzeug verbundenes Anschlussterminal (26) angeordnet ist, mit dem ein erstes und ein zweites Ende (34, 35) des mindestens einen Leiters (18) elektrisch verbunden sind,
**dadurch gekennzeichnet, dass** das Anschlussterminal (26) einen Temperatursensor (38) und einen als Temperaturregler für die Lenkradheizung ausgebildeten Heizungsregler (44) umfasst sowie in einer Tasche innerhalb der Beschichtung (20) angeordnet ist.

2. Lenkrad (10) nach Anspruch 1, **dadurch gekennzeichnet, dass** der mindestens eine elektrische Leiter (18) direkt in die Beschichtung (20) eingebettet ist.

3. Lenkrad (10) nach Anspruch 1 oder 2, **dadurch gekennzeichnet, dass** der Temperatursensor (38) einen NTC-Widerstand, einen PTC-Widerstand oder ein Thermoelement aufweist.

4. Lenkrad (10) nach einem der vorhergehenden Ansprüche, **dadurch gekennzeichnet, dass** das Anschlussterminal (26) über eine Signalleitung (42), insbesondere eine Bus-Leitung, mit einem Bedienelement und/oder einem Steuergerät im Fahrzeug verbunden ist oder **dadurch gekennzeichnet, dass** das Anschlussterminal (26) fahrzeugseitig ausschließlich über Heizstrom führende Leitungen (30, 32) verbunden ist.

5. Lenkrad (10) nach einem der vorhergehenden Ansprüche, **dadurch gekennzeichnet, dass** der Heizungsregler (44)ein mit einer Platine ausgestatteter Heizungsregler oder ein PTC-Element ist, welches einen integrierten Heizungsregler bildet.

6. Lenkrad (10) nach einem der vorhergehenden Ansprüche, wobei das Anschlussterminal (26) so ausgebildet ist, dass es am Lenkradkranz (14) und/oder einer der Lenkradspeichen (16) verclipst und/oder darin eingesteckt ist.

7. Lenkrad (10) nach einem der vorhergehenden Ansprüche, **dadurch gekennzeichnet, dass** das Anschlussterminal (26) in die Tasche eingeclipst und/oder darin eingeschäumt oder eingespritzt ist.

8. Lenkrad (10) nach einem der vorhergehenden Ansprüche, **dadurch gekennzeichnet, dass** das Anschlussterminal (26) mindestens zwei Kontaktelemente (36, 37) umfasst und das erste und das zweite Ende (34, 35) des mindestens einen elektrischen Leiters (18) durch Fusen, Löten, Schweißen, Crimpen, Kleben, Klemmen oder Schrauben elektrisch mit jeweils einem der Kontaktelemente (36, 37) verbunden sind.

9. Lenkrad (10) nach einem der vorhergehenden Ansprüche, **dadurch gekennzeichnet, dass** am Lenkradkranz (14) ein Sensor zur Handerkennung angeordnet ist und der Sensor elektrisch mit dem Anschlussterminal (26) verbunden ist.

10. Verfahren zur Herstellung eines Lenkrads (10) für ein Fahrzeug, mit einem Lenkradkranz (14) und einer oder mehreren Lenkradspeichen (16), wobei zumindest der Lenkradkranz (14) eine als Umschäumung ausgeführte Beschichtung (20) umfasst, mit den folgenden Schritten:
a) Anbringen eines Anschlussterminals (26) für zumindest einen langgestreckten elektrischen Leiter (18) am Lenkradkranz (14) und/oder an einer der Lenkradspeichen (16) indem das Anschlussterminal (26) am Lenkradkranz (14) und/oder an einer der Lenkradspeichen (16) verclipst oder in einer Schaumtasche angeordnet oder in eine Schaumtasche eingeschäumt wird,
b) Verlegen des mindestens einen elektrischen Leiters (18) für eine Lenkradheizung direkt in die Beschichtung (20), und
c) elektrisches Verbinden eines ersten und eines zweiten Endes (34, 35) des mindestens einen elektrischen Leiters (18) mit dem Anschlussterminal (26).

11. Verfahren nach Anspruch 10, **dadurch gekennzeichnet, dass** im Schritt c) das erste und das zweite Ende (34, 35) des mindestens einen elektrischen Leiters (18) durch Fusen, Löten, Schweißen, Crimpen, Kleben, Klemmen oder Schrauben elektrisch mit jeweils einem Kontaktelement (36, 37) des Anschlussterminals (26) verbunden werden.

12. Verfahren nach Anspruch 11, **dadurch gekennzeichnet, dass** die Kontaktelemente (36, 37) des Anschlussterminals (26) im Schritt c) mit dem elektrischen Leiter (18) verbunden und anschließend um den elektrischen Leiter (18) gefaltet werden.

13. Verfahren nach einem der Ansprüche 10 bis 12, **dadurch gekennzeichnet, dass** das Verfahren ganz oder teilweise automatisiert ausgeführt wird.

14. Verfahren nach einem der Ansprüche 10 bis 13, **dadurch gekennzeichnet, dass** das elektrische Verbinden und/oder ein Abisolieren des ersten und des zweiten Endes (34, 35) des elektrischen Leiters (18) durch einen Laser, insbesondere durch einen mittels einer frei programmierbaren, mehrachsigen Werkzeugmaschine geführten Laser erfolgt.

15. Verfahren nach einem der Ansprüche 10 bis 14, **dadurch gekennzeichnet, dass** eine frei programmierbare, mehrachsige Werkzeugmaschine eine Schneideinrichtung längs der als Umschäumung oder Umspritzung ausgebildeten Beschichtung (20) führt und diese ohne Abtrag aufschneidet und den elektrischen Leiter (18) vor einem Zurückfedern der Umschäumung oder Umspritzung in den Schnitt (24) einlegt.

## Claims

1. A steering wheel (10) for a vehicle comprising
a steering wheel rim (14) and
one or more steering wheel spokes (16),
wherein at least the steering wheel rim (14) comprises a coating (20) and at least one elongate electric conductor (18) for a steering wheel heating,
wherein a connecting terminal (26) connected to an electric power source inside the vehicle to which first and second ends (34, 35) of the at least one conductor (18) are electrically connected is arranged on the steering wheel rim (14) and/or on one of the steering wheel spokes (16),
**characterized in that** the connecting terminal (26) comprises a temperature sensor (38) and a heating controller (44) configured as temperature controller for the steering wheel heating and is arranged in a pocket inside the coating (20).

2. The steering wheel (10) according to claim 1, **characterized in that** the at least one electric conductor (18) is embedded directly in the coating (20).

3. The steering wheel (10) according to claim 1 or 2, **characterized in that** the temperature sensor (38) includes an NTC resistor, a PTC resistor or a thermocouple.

4. The steering wheel (10) according to any one of the preceding claims, **characterized in that** the connecting terminal (26) is connected, via a signal line (42), especially a bus line, to an operating element and/or a control device within the vehicle, or **characterized in that** the connecting terminal (26) is connected, on the vehicle side, exclusively via lines (30, 32) guiding heating current.

5. The steering wheel (10) according to any one of the preceding claims, **characterized in that** the heating controller (44) is a heating controller equipped with a printed circuit board or a PTC element forming an integrated heating controller.

6. The steering wheel (10) according to any one of the preceding claims, wherein the connecting terminal (26) is configured so that it is clipped to and/or inserted in a steering wheel rim (14) and/or any one of the steering wheel spokes (16).

7. The steering wheel (10) according to any one of the preceding claims, **characterized in that** the connecting terminal (26) is clipped into and/or foam-wrapped or injection-molded in the pocket.

8. The steering wheel (10) according to any one of the preceding claims, **characterized in that** the connecting terminal (26) comprises at least two contact elements (36, 37) and each of the first and second ends (34, 35) of the at least one electric conductor (18) is electrically connected to one of the contact elements (36, 37) by fusing, soldering, welding, crimping, gluing, clamping or screwing.

9. The steering wheel (10) according to any one of the preceding claims, **characterized in that** a sensor for hand detection is arranged on the steering wheel rim (14) and the sensor is electrically connected to the connecting terminal (26).

10. A method for producing a steering wheel (10) for a vehicle, comprising a steering wheel rim (14) and one or more steering wheel spokes (16), wherein at least the steering wheel rim (14) comprises a coating (20) in the form of foam wrapping, with the following steps of:
a) attaching a connecting terminal (26) for at least one elongate electric conductor (18) to the steering wheel rim (14) and/or to one of the steering wheel spokes (16) by clipping the connecting terminal (26) to the steering wheel rim (14) and/or to one of the steering wheel spokes (16) or disposing the same in a foam pocket or foam-wrapping the same in a foam pocket,
b) laying the at least one electric conductor (18) for a steering wheel heating directly into the coating (20), and
c) electrically connecting first and second ends (34, 35) of the at least one electric conductor (18) to the connecting terminal (26).

11. The method according to claim 10, **characterized in that** in step c) each of the first and second ends (34, 35) of the at least one electric conductor (18) is electrically connected to one contact element (36, 37) of the connecting terminal (26) by fusing, soldering, welding, crimping, gluing, clamping or screwing.

12. The method according to claim 11, **characterized in that** in step c) the contact elements (36, 37) of the connecting terminal (26) are connected to the electric conductor (18) and are subsequently folded around the electric conductor (18).

13. The method according to any one of the claims 10 to 12, **characterized in that** the method is carried out in a completely or partially automated manner.

14. The method according to any one of the claims 10 to 13, **characterized in that** the first and second ends (34, 35) of the electric conductor (18) are electrically connected and/or insulated by a laser, in particular by a laser guided by means of a freely programmable multi-axis machine tool.

15. The method according to any one of the claims 10 to 14, **characterized in that** a freely programmable multi-axis machine tool guides a cutter along the coating (20) configured as a foam wrapping or overmolding and cuts said coating (20) open without abrasion, and inserts the electric conductor (18) into the cut (24) before the foam-wrapping or overmolding springs back.

## Revendications

1. Volant de direction (10) pour un véhicule avec
une jante de volant (14) et
un ou plusieurs rayons de volant (16),
pour lequel au moins la jante du volant (14) comprend un revêtement (20) et au moins un conducteur électrique allongé (18) pour un système de chauffage du volant,
pour lequel une borne de connexion (26) connectée à une source d'énergie électrique dans le véhicule est disposée sur la jante du volant (14) et/ou sur l'un des rayons du volant (16), borne de connexion à laquelle une première et une seconde extrémités (34, 35) du au moins un conducteur (18) sont connectées électriquement,
**caractérisé en ce que** la borne de connexion (26) comprend un capteur de température (38) et un régulateur de chauffage (44) configuré comme un régulateur de température pour le chauffage du volant et qui est disposée dans une poche à l'intérieur du revêtement (20).

2. Volant de direction (10) selon la revendication 1, **caractérisé en ce que** le au moins un conducteur électrique (18) est directement noyé dans le revêtement (20).

3. Volant de direction (10) selon la revendication 1 ou 2, **caractérisé en ce que** le capteur de température (38) comprend une résistance CTN, une résistance CTP ou un thermocouple.

4. Volant de direction (10) selon l'une des revendications précédentes, **caractérisé en ce que** la borne de connexion (26) est reliée à un élément de commande et/ou à une unité de commande dans le véhicule par l'intermédiaire d'une ligne porteuse de signaux (42), notamment une ligne à bus, ou **caractérisé en ce que** la borne de connexion (26) est reliée côté véhicule exclusivement par des lignes (30, 32) conduisant du courant de chauffage.

5. Volant de direction (10) selon l'une des revendications précédentes, **caractérisé en ce que** le contrôleur de chauffage (44) est un contrôleur de chauffage équipé d'une carte de circuit imprimé ou d'un élément CTP, lequel forme un contrôleur de chauffage intégré.

6. Volant de direction (10) selon l'une quelconque des revendications précédentes, pour lequel la borne de connexion (26) est configurée pour être clipsée et/ou insérée dans la jante (14) du volant et/ou dans l'un des rayons (16) du volant.

7. Volant de direction (10) selon l'une quelconque des revendications précédentes, **caractérisé en ce que** la borne de connexion (26) est clipsée dans la poche et/ou moussée ou injectée dans celle-ci.

8. Volant de direction (10) selon l'une quelconque des revendications précédentes, **caractérisé en ce que** la borne de connexion (26) comprend au moins deux éléments de contact (36, 37) et que la première et la deuxième extrémité (34, 35) du au moins un conducteur électrique (18) sont reliées électriquement chacun à l'un des éléments de contact (36, 37) par fusion, brasage, soudage, sertissage, collage, serrage ou vissage.

9. Volant de direction (10) selon l'une des revendications précédentes, **caractérisé en ce qu'**un capteur de détection de la main est disposé sur la jante du volant (14) et que le capteur est relié électriquement à la borne de connexion (26).

10. Procédé de fabrication d'un volant de direction (10) pour un véhicule, comprenant une jante de volant (14) et un ou plusieurs rayons de volant (16), pour lequel au moins la jante de volant (14) comprend un revêtement (20) sous la forme d'un revêtement en mousse, comprenant les étapes suivantes :
a) Fixer une borne de connexion (26) pour au moins un conducteur électrique allongé (18) à la jante du volant (14) et/ou à l'un des rayons du volant (16) en clipsant la borne de connexion (26) à la jante du volant (14) et/ou à l'un des rayons du volant (16) ou en la disposant dans une poche de mousse ou en la faisant couvrir de mousse dans une poche de mousse,
b) Poser le au moins un conducteur électrique (18) pour un chauffage du volant de direction directement dans le revêtement (20), et
c) Connecter électriquement une première et une seconde extrémité (34, 35) du au moins un conducteur électrique (18) à la borne de connexion (26).

11. Procédé selon la revendication 10, **caractérisé en ce que**, à l'étape c), la première et la seconde extrémité (34, 35) du au moins un conducteur électrique (18) sont connectées chacun électriquement à un élément de contact respectif (36, 37) de la borne de connexion (26) par fusion, soudure, soudage, sertissage, collage, serrage ou vissage.

12. Procédé selon la revendication 11, **caractérisé en ce que** les éléments de contact (36, 37) de la borne de connexion (26) sont connectés au conducteur électrique (18) à l'étape c) et ensuite pliés autour du conducteur électrique (18).

13. Procédé selon l'une quelconque des revendications 10 à 12, **caractérisé en ce que** le procédé est mis en oeuvre de manière totalement ou partiellement automatique.

14. Procédé selon l'une quelconque des revendications 10 à 13, **caractérisé en ce que** la connexion électrique et/ou un dénudage des première et deuxième extrémités (34, 35) du conducteur électrique (18) est réalisé par un laser, notamment par un laser guidé au moyen d'une machine-outil multiaxes librement programmable.

15. Procédé selon l'une des revendications 10 à 14, **caractérisé en ce qu'**une machine-outil multiaxes librement programmable guide un dispositif de coupe le long du revêtement (20), qui se présente sous la forme d'une mousse ou d'un surmoulage, et le découpe sans l'enlever et insère le conducteur électrique (18) dans la coupe (24) avant que la mousse ou le surmoulage ne se rétracte.
